# EUROPEAN PATENT SPECIFICATION

(11) **EP 3 177 075 B1**
(45) Date of publication and mention of the grant of the patent: **23.09.2020**
(21) Application number: 14899945.1
(22) Date of filing: 22.08.2014
(51) Int. Cl.: H04W 36/00, H04W 40/36, H04W 84/04

(54) **COMMUNICATION SYSTEM, LOCAL MOBILE NODE AND BASE STATION**
KOMMUNIKATIONSSYSTEM, LOKALER MOBILER KNOTEN UND BASISSTATION
SYSTÈME DE COMMUNICATION, NOEUD MOBILE LOCAL ET STATION DE BASE

(43) Date of publication of application: 07.06.2017
(73) Proprietor: Huawei Technologies Co., Ltd., Longgang District Shenzhen, Guangdong 518129 (CN)
(72) Inventor: DAI, Mingzeng, Shenzhen Guangdong 518129 (CN); ZENG, Qinghai, Shenzhen Guangdong 518129 (CN); GUO, Yi, Shenzhen Guangdong 518129 (CN)
(74) Representative: Goddar, Heinz J.
(86) International application number: PCT/CN2014/085045
(87) International publication number: WO 2016/026151

(56) References cited:
- EP-A1- 3 171 635
- WO-A1-2010/129050
- WO-A1-2012/061967
- CN-A- 101 188 861
- CN-A- 101 577 950
- CN-A- 102 917 419
- US-A1- 2011 256 872
- SAMSUNG: "Discussion on signaling load reduction", 3GPP DRAFT; R2-133264 SIGNALING LOAD REDUCTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Ljubljana, Slovenia; 20131007 - 20131011 27 September 2013 (2013-09-27), XP050718960, Retrieved from the Internet: URL:http://www.3gpp.org/ftp/tsg_ran/WG2_RL 2/TSGR2_83bis/Docs/ [retrieved on 2013-09-27]

## Description

### TECHNICAL FIELD

The present invention relates to the field of mobile communications technologies, and in particular, to a communications system, a local mobile node, and a base station.

### BACKGROUND

With rapid development of a mobile service, data traffic increases faster in some densely populated areas. Data statistics indicate that 20% areas with dense mobile services carry 80% data traffic of mobile service operators. Therefore, it is extremely urgent to offload data in these areas, so that radio spectrum resources are efficiently used. Characterized by low costs, miniaturization, convenient site location selection, simple deployment, and the like, a small cell is a means of data offloading performed by the mobile service operator. However, as a requirement for a traffic volume increases, small cells are deployed more densely.

Because the small cell is compact and may generally cover a range of 10 meters to 200 meters, a user terminal (user equipment, UE) in a moving state is handed over between small cells in a process of data communication. In a long term evolution (LTE) system, a handover of the UE between small cells includes three phases:
(1) Handover preparation phase: A source small cell performs a handover decision according to a measurement result and the like; after determining a target small cell for a handover, the source small cell sends, to the target small cell, a handover request that carries basic information of the UE; and the target small cell returns a handover request response to the source small cell according to the basic information of the UE.
(2) Handover execution phase: The source small cell notifies the UE of the target small cell, so that the UE and the target small cell establishes a radio link.
(3) Handover complete phase: The target small cell instructs a source base station to release the basic information of the UE, and sends a path handover request message to a mobility management entity (MME); and the MME sends control signaling to a serving gateway (S-GW), to complete a handover of a user data transmission path between the S-GW and a small cell.

This manner of completing a handover of the UE between small cells has the following problems:
For high-speed moving UE, because a small cell has a relatively small coverage area, the UE moves to the target small cell and then moves away from the target small cell at a high speed. During the handover execution phase and the handover complete phase, the UE needs to consume some time to access the target small cell, and the target small cell needs to exchange signaling with the MME to complete a handover of a user data transmission path. Therefore, a time consumed in a handover procedure is generally greater than a time for which the UE is located in a target cell. When the handover is completed, the UE has left the target cell, and apparently, a handover failure is caused. During the handover preparation phase, because a handover decision and a signaling exchange with the target cell also need to consume some time, the UE may have left the source cell during this period, and apparently, a failure in establishing the radio link is caused.

There are many deployed small cells, and when multiple UEs are handed over between small cells, a target small cell corresponding to each UE needs to send a path handover request message to the MME during the handover complete phase, and the MME sends control signaling to the S-GW to complete a handover of a user data transmission path between the S-GW and a small cell. Apparently, if each UE is handed over between small cells, core network devices such as the MME and the S-GW need to receive and send multiple pieces of signaling. Consequently, signaling load on the MME and the S-GW is excessively heavy, and work efficiency of the MME and the S-GW is reduced.

WO 2012/061967 discloses a wireless communication system, method of routing data in a wireless communication system, and a method for handing over a wireless communication device, having an established data connection to a local network. In particular, it discloses ensuring connectivity to a local network for a wireless communication device, such as a mobile telephone, a portable computer, a personal digital assistant (PDA), or the like, when the wireless communication device moves beyond the coverage of a femtocell or Home eNodeB (HeNB). It further discloses that a HeNB gateway enables a UE to have continuous Local IP Access (LIPA) connection when the UE moves from the coverage area of a source HeNB to the coverage area of a target HeNB, i.e., upon a handover.
EP 3 171 635 A1 discloses a path switching method. The path switching method includes: receiving, by a mobility anchor, a path switch request message sent by a target base station; keeping, by the mobility anchor, a user plane path between the mobility anchor and a serving gateway SGW unchanged if the mobility anchor is to switch a local path; and switching, by the mobility anchor, a user plane path between the mobility anchor and a source base station to the target base station.

### SUMMARY

The present invention provide a local mobile node of claim 1, an evolved NodeB of claim 6 and a communications system of claim 10, so as to resolve prior-art problems that a handover failure may occur when high-speed moving UE hands over between small cells, signaling load on a core network device is excessively heavy, and work efficiency of the core network device is decreased. Possible implementation manners are disclosed in the dependent claims.

According to a first aspect, a communications system is provided, where the communications system includes a mobility management entity MME and multiple eNBs, and further includes a local mobile node;
the local mobile node is connected to the multiple eNBs, the MME, and a serving gateway; and
the local mobile node is configured to:
when first user equipment UE is handed over from a first source eNB in the multiple eNBs to a first target eNB in the multiple eNBs, receive a first path handover request sent by the first target eNB, where a first user data path is established between the first source eNB and the local mobile node for the first UE, a second user data path is established between the local mobile node and the serving gateway for the first UE, and user plane data is transmitted between the first UE and the serving gateway by using the first user data path and the second user data path; and
establish a third user data path between the local mobile node and the first target eNB for the first UE according to the first path handover request when the first path handover request is a local path handover request, the local path handover request being sent by the first target eNB when a first handover request sent by the first source eNB to the first target eNB carries an identifier of the local mobile node, so that the user plane data is transmitted between the first UE and the serving gateway by using the third user data path and the second user data path;
wherein the local mobile node is further configured to:
   receive runtime information reported by the multiple eNBs, where the runtime information includes at least one of the following information: a measurement report, interference information, load information, or coverage information; and
   select the first target eNB as a target eNB for a handover according to at least one of the runtime information, a moving speed and/or a moving direction of the first UE, or a quantity of handovers of the first UE.

With reference to the first aspect, in a first possible implementation manner, the local mobile node is configured to:
save a tunnel endpoint identifier and an IP address that are in the first path handover request and that are allocated by the first target eNB, so as to send downlink data of the first UE to the first target eNB according to the tunnel endpoint identifier and the IP address that are allocated by the first target eNB; and
send, to the first target eNB, a tunnel endpoint identifier and an IP address that are allocated by the local mobile node, so that the first target eNB sends uplink data of the first UE to the local mobile node according to the tunnel endpoint identifier and the IP address that are allocated by the local mobile node.

With reference to the first aspect or the first possible implementation manner of the first aspect, in a fourth possible implementation manner, the first path handover request carries an identifier of a mobile node; and
the local mobile node is further configured to determine that the identifier that is of the mobile node and that is carried in the first path handover request is an identifier of the local mobile node.

With reference to the first aspect or the first possible implementation manner of the first aspect, in a fifth possible implementation manner, the first path handover request carries an identifier of the first source eNB; and
the local mobile node is further configured to determine that the identifier of the first source eNB exists in identifiers of the multiple eNBs.

With reference to the first aspect or any one of the foregoing possible implementation manners of the first aspect, in a sixth possible implementation manner, the local mobile node is further configured to:
when second user equipment UE is handed over from a second source eNB to a second target eNB in the multiple eNBs, receive a second path handover request sent by the second target eNB, where the second source eNB is not connected to the local mobile node, and user plane data is transmitted between the second UE and the serving gateway by using a user data path between the second source eNB and the serving gateway; and
send a third path handover request to the MME according to the second path handover request, so as to establish a fourth user data path between the local mobile node and the serving gateway for the second UE; and establish a fifth user data path between the local mobile node and the second target eNB for the second UE according to the second path handover request, so that user plane data is transmitted between the second UE and the serving gateway by using the fourth user data path and the fifth user data path.

With reference to the first aspect, in a seventh possible implementation manner, the moving speed and/or the moving direction of the first UE are/is determined according to a historical movement track of the first UE and/or the measurement report.

With reference to the first aspect or the seventh possible implementation manner of the first aspect, in an eighth possible implementation manner, the local mobile node is further configured to send a handover preparation message to the first target eNB, so that the first target eNB prepares for a handover in advance.

With reference to the first aspect or any one of the seventh to the eighth possible implementation manners of the first aspect, in a ninth possible implementation manner, the local mobile node is further configured to send a handover command message to the first source eNB, and information that is about a target eNB and that is carried in the handover command message is information about the first target eNB.

With reference to the ninth possible implementation manner of the first aspect, in a tenth possible implementation manner,
the handover command message further carries a handover condition, so that the first source eNB sends the handover condition to the first UE, and the handover condition is used to indicate a condition of handing over the first UE.

With reference to the first aspect or any one of the foregoing possible implementation manners of the first aspect, in an eleventh possible implementation manner, the local mobile node is further configured to:
receive a request message sent by a third eNB, where the request message includes an identifier of third UE, and the request message is sent in a procedure of re-establishing a radio resource control RRC connection by the third UE and the third eNB;
obtain, according to the request message, a context that is of the third UE and that is corresponding to the identifier of the third UE; and
send the context of the third UE to the third eNB, so that the third eNB completes the procedure of re-establishing the RRC connection.

With reference to the eleventh possible implementation manner of the first aspect, in a twelfth possible implementation manner, the local mobile node is further configured to establish a sixth user data path between the local mobile node and the third eNB for the third UE according to the request message.

According to a second aspect, a local mobile node is provided, and is applied to a communications system that includes a mobility management entity MME and multiple eNBs, where
the local mobile node is connected to the multiple eNBs, the MME, and a serving gateway; and
the local mobile node includes:
a communications unit, configured to interact with the multiple eNBs, the MME, or the serving gateway; and
a processing unit, configured to:
   when first user equipment UE is handed over from a first source eNB in the multiple eNBs to a first target eNB in the multiple eNBs, receive, by using the communications unit, a first path handover request sent by the first target eNB, where a first user data path is established between the first source eNB and the local mobile node for the first UE, a second user data path is established between the local mobile node and the serving gateway for the first UE, and user plane data is transmitted between the first UE and the serving gateway by using the first user data path and the second user data path; and
   establish a third user data path between the local mobile node and the first target eNB for the first UE according to the first path handover request when the first path handover request is a local path handover request, the local path handover request being sent by the first target eNB when a first handover request sent by the first source eNB to the first target eNB carries an identifier of the local mobile node, so that the user plane data is transmitted between the first UE and the serving gateway by using the third user data path and the second user data path;
   wherein the processing unit is further configured to:
      receive, by using the communications unit, runtime information reported by the multiple eNBs, where the runtime information includes at least one of the following information: a measurement report, interference information, load information, or coverage information; and
      select the first target eNB as a target eNB for a handover according to at least one of the runtime information, a moving speed and/or a moving direction of the first UE, or a quantity of handovers of the first UE.

With reference to the second aspect, in a first possible implementation manner, the processing unit is configured to:
save a tunnel endpoint identifier and an IP address that are in the first path handover request and that are allocated by the first target eNB, so as to send downlink data of the first UE to the first target eNB according to the tunnel endpoint identifier and the IP address that are allocated by the first target eNB; and
send, to the first target eNB by using the communications unit, a tunnel endpoint identifier and an IP address that are allocated by the local mobile node, so that the first target eNB sends uplink data of the first UE to the local mobile node according to the tunnel endpoint identifier and the IP address that are allocated by the local mobile node.

With reference to the second aspect or the first possible implementation manner of the second aspect, in a fourth possible implementation manner, the first path handover request carries an identifier of a mobile node; and
the processing unit is further configured to determine that the identifier that is of the mobile node and that is carried in the first path handover request is an identifier of the local mobile node.

With reference to the second aspect or the first possible implementation manner of the second aspect, in a fifth possible implementation manner, the first path handover request carries an identifier of the first source eNB; and
the processing unit is further configured to determine that the identifier of the first source eNB exists in identifiers of the multiple eNBs.

With reference to the second aspect or any one of the foregoing possible implementation manners of the second aspect, in a sixth possible implementation manner, the processing unit is further configured to:
when second user equipment UE is handed over from a second source eNB to a second target eNB in the multiple eNBs, receive, by using the communications unit, a second path handover request sent by the second target eNB, where the second source eNB is not connected to the local mobile node, and user plane data is transmitted between the second UE and the serving gateway by using a user data path between the second source eNB and the serving gateway; and
send a third path handover request to the MME according to the second path handover request by using the communications unit, so as to establish a fourth user data path between the local mobile node and the serving gateway for the second UE; and establish a fifth user data path between the local mobile node and the second target eNB for the second UE according to the second path handover request, so that user plane data is transmitted between the second UE and the serving gateway by using the fourth user data path and the fifth user data path.

With reference to the second aspect, in a seventh possible implementation manner, the moving speed and/or the moving direction of the first UE are/is determined according to a historical movement track of the first UE and/or the measurement report.

With reference to the second aspect or the seventh possible implementation manner of the second aspect, in an eighth possible implementation manner, the processing unit is further configured to send a handover preparation message to the first target eNB by using the communications unit, so that the first target eNB prepares for a handover in advance.

With reference to the second aspect or any one of the seventh to the eighth possible implementation manners of the second aspect, in a ninth possible implementation manner, the processing unit is further configured to send a handover command message to the first source eNB by using the communications unit, and information that is about a target eNB and that is carried in the handover command message is information about the first target eNB.

With reference to the ninth possible implementation manner of the second aspect, in a tenth possible implementation manner,
the handover command message further carries a handover condition, so that the first source eNB sends the handover condition to the first UE, and the handover condition is used to indicate a condition of handing over the first UE.

With reference to the second aspect or any one of the foregoing possible implementation manners of the second aspect, in an eleventh possible implementation manner, the processing unit is further configured to:
receive, by using the communications unit, a request message sent by a third eNB, where the request message includes an identifier of third UE, and the request message is sent in a procedure of re-establishing a radio resource control RRC connection by the third UE and the third eNB;
obtain, according to the request message, a context that is of the third UE and that is corresponding to the identifier of the third UE; and
send the context of the third UE to the third eNB by using the communications unit, so that the third eNB completes the procedure of re-establishing the RRC connection.

With reference to the eleventh possible implementation manner of the second aspect, in a twelfth possible implementation manner, the processing unit is further configured to establish a sixth user data path between the local mobile node and the third eNB for the third UE according to the request message.

According to a third aspect, an evolved NodeB eNB is provided, where the eNB is connected to the local mobile node in any one of the first aspect, or the first to the thirteenth possible implementation manners of the first aspect; and
the eNB includes:
a communications unit, configured to interact with first user equipment UE, a first source eNB, and the local mobile node; and
a processing unit, configured to: when the first UE is handed over from a first source eNB in other eNBs to the eNB, send a first path handover request to the local mobile node when a first handover request sent by the first source eNB to the eNB carries an identifier of the local mobile node, to instruct the local mobile node to establish a third user data path between the local mobile node and the eNB for the first UE;
the processing unit is further configured to:
   report runtime information to the local mobile node by using the communications unit, so that the local mobile node selects the eNB as a target eNB for a handover according to at least one of the runtime information, a moving speed and/or a moving direction of the first UE, or a quantity of handovers of the first UE, where the runtime information includes at least one of the following information: a measurement report, interference information, load information, or coverage information.

With reference to the third aspect, in a first possible implementation manner, the processing unit is configured to:
send, to the local mobile node by using the communications unit, a tunnel endpoint identifier and an IP address that are in the first path handover request and that are allocated by the eNB, so that the local mobile node sends downlink data of the first UE to the eNB according to the tunnel endpoint identifier and the IP address that are allocated by the eNB; and
receive and save, by using the communications unit, a tunnel endpoint identifier and an IP address that are allocated by the local mobile node, so that the eNB sends uplink data of the first UE to the local mobile node according to the tunnel endpoint identifier and the IP address that are allocated by the local mobile node.

With reference to the third aspect or the first possible implementation manner of the third aspect, in a fourth possible implementation manner, the first path handover request carries an identifier of a mobile node.

With reference to the third aspect or the first possible implementation manner of the third aspect, in a fifth possible implementation manner, the first path handover request carries an identifier of the first source eNB.

With reference to the third aspect or any one of the foregoing possible implementation manners of the third aspect, in a sixth possible implementation manner, the processing unit is further configured to:
when second user equipment (UE) is handed over from a second source eNB to the eNB, send a second path handover request to the local mobile node by using the communications unit, so that the local mobile node establishes, according to the second path handover request, a fourth user data path between the local mobile node and the serving gateway for the second UE, and a fifth user data path between the local mobile node and the eNB for the second UE, and user plane data is transmitted between the second UE and the serving gateway by using the fourth user data path and the fifth user data path, where the second source eNB is not connected to the local mobile node, and the user plane data is transmitted between the second UE and the serving gateway by using a user data path between the second source eNB and the serving gateway.

With reference to the third aspect, in an seventh possible implementation manner, the processing unit is further configured to: receive a handover preparation message by using the communications unit, and prepare for a handover in advance.

With reference to the third aspect or any one of the foregoing possible implementation manners of the third aspect, in an eighth possible implementation manner, the processing unit is further configured to:
send a request message to the local mobile node by using the communications unit, so that the local mobile node establishes a sixth user data path between the local mobile node and the eNB for a third UE according to the request message, where the request message includes an identifier of the third UE, and the request message is sent in a procedure of re-establishing a radio resource control RRC connection by the third UE and the eNB; and
receive, by using the communications unit, a context that is of the third UE and that is sent by the local mobile node, and complete, according to the context of the third UE, the procedure of re-establishing the RRC connection.

In the embodiments of the present invention, a communications system that includes an MME and multiple eNBs further includes a local mobile node, and the local mobility node is connected to the multiple eNBs, the MME, and a serving gateway. The local mobile node receives a path handover request sent by a target eNB, and when determining, according to a path handover request message, that a local path handover needs to be performed, establishes a user data path between the local mobile node and the target eNB for UE according to the path handover request, so that user plane data is transmitted between the UE and the serving gateway by using the user data path. In this way, after the UE is successfully handed over between eNBs, only a user data path between the local mobile node and an eNB needs to be changed without a need to change a user data path between the local mobile node and each of the MME and the S-GW, so that signaling load on the MME can be avoided, and work efficiency of the MME can be improved. In addition, because the target eNB does not need to exchange signaling with the MME to complete a handover of a user data path, a time consumed by an entire handover procedure is shorter, and a handover failure caused in a conventional manner is avoided.

### BRIEF DESCRIPTION OF DRAWINGS

FIG. 1 is a schematic architecture diagram of a communications system according to an embodiment of the present invention;
FIG. 2 is a schematic structural diagram of a local mobile node according to an embodiment of the present invention;
FIG. 3 is a schematic structural diagram of an eNB according to an embodiment of the present invention;
FIG. 4 is a schematic diagram of a network architecture of a small cell handover of a mobile terminal according to an embodiment of the present invention;
FIG. 5 is a specific flowchart of a method for handing over a mobile terminal between small cells according to an embodiment of the present invention;
FIG. 6 is a flowchart of a method for handing over a mobile terminal between small cells according to an embodiment of the present invention;
FIG. 7 is a flowchart of determining a local path handover by a local mobility anchor according to an embodiment of the present invention;
FIG. 8 is a specific flowchart of sending a candidate small cell to a source small cell by a local mobility anchor according to an embodiment of the present invention;
FIG. 9 is a specific flowchart of performing advance handover preparation by a local mobility anchor according to an embodiment of the present invention; and
FIG. 10 is a specific flowchart of re-establishing a radio link between UE and a target small cell according to an embodiment of the present invention.

### DESCRIPTION OF EMBODIMENTS

According to the technical solutions of the present invention, a local mobile node is disposed between a base station side and core network devices such as an MME and an S-GW. In this way, after a radio link is established between a target base station and UE, the local mobile node receives a path handover request message sent by the target base station. When determining, according to the path handover request message, that the target base station and a source base station belong to a same base station cluster that is currently corresponding to the local mobile node, the local mobile node allocates an uplink data transmission tunnel identifier to the target base station, and sends the uplink data transmission tunnel identifier to the target base station by using a path handover confirmation message, so that the local mobile node and the target base station establish an uplink data transmission tunnel by using the uplink data transmission tunnel identifier, to transmit user data by using the uplink data transmission tunnel. In this way, after the UE is successfully handed over between base stations, only a data transmission path between the local mobile node and a base station needs to be changed without a need to change a data transmission path between the local mobile node and each of the MME and the S-GW, so that signaling load on the MME can be avoided, and work efficiency of the MME can be improved. In addition, because the target base station does not need to exchange signaling with the MME to complete a handover of a user data transmission path, a time consumed by an entire handover procedure is shorter, and a handover failure caused in a conventional manner is avoided.

The local mobile node disposed between the base station side and the core network devices is a data communication and control node. Preferably, in embodiments of the present invention, the local mobile node is a local mobility anchor.

In the embodiments of the present invention, a base station may include base stations of various types, such as a cell, a home NodeB, a small cell, and a micro base station. Preferably, the base station may be a small cell or a micro base station that has a relatively small coverage area or that is used for indoor coverage.

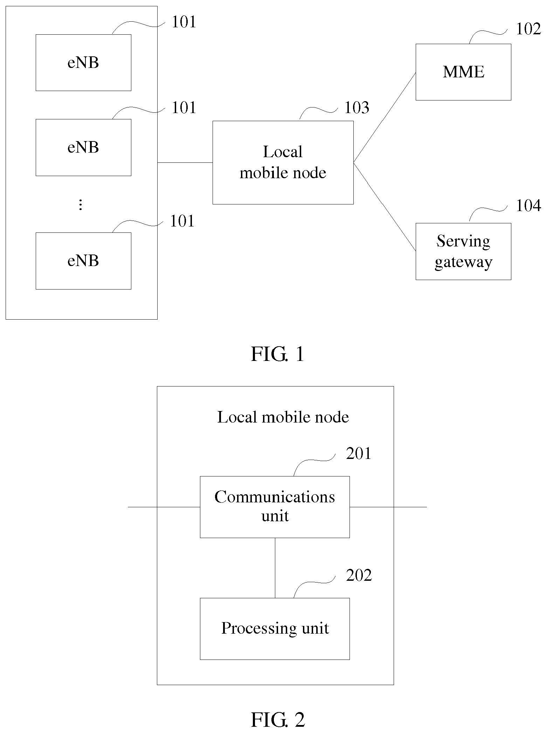

An embodiment of the present invention provides a communications system. As shown in FIG. 1, the communications system includes:
a mobility management entity MME 102, multiple evolved NodeBs eNBs 101, and a local mobile node 103.

The local mobile node 103 is connected to the multiple eNBs 101, the MME 102, and a serving gateway 104.

The local mobile node 103 is configured to:
when first user equipment UE is handed over from a first source eNB 101 in the multiple eNBs 101 to a first target eNB 101 in the multiple eNBs 101, receive a first path handover request sent by the first target eNB 101, where before the first UE is handed over to the first target eNB 101, or when the first UE is just handed over to the first target eNB, no user data path is established between the first target eNB 101 and the local mobile node 103 for the first UE, a first user data path is established between the first source eNB 101 and the local mobile node 103 for the first UE, a second user data path is established between the local mobile node 103 and the serving gateway 104 for the first UE, and user plane data is transmitted between the first UE and the serving gateway 104 by using the first user data path and the second user data path; and
establish a third user data path between the local mobile node 103 and the first target eNB 101 for the first UE according to the first path handover request, so that the user plane data is transmitted between the first UE and the serving gateway 104 by using the third user data path and the second user data path.

Specifically, the local mobile node 103 may be connected to the multiple eNBs 101 by using an S1 interface, may be connected to the MME 102 by using an S1-C interface, and may be connected to the serving gateway 104 by using an S1-U interface.

In conclusion, in a communications system, a local mobile node is disposed between a base station side and core network devices (an MME and a serving gateway). When UE is handed over from a source base station to a target base station, the target base station sends a first path handover request (such as a local path handover request) to the local mobile node, and the local mobile node establishes a user data path between the local mobile node and the target base station based on the first path handover request. Therefore, only a data transmission path between the local mobile node and a base station needs to be changed without a need to change a data transmission path between the local mobile node and each of the MME and the S-GW, so that signaling load on the MME can be avoided, and work efficiency of the MME can be improved. In addition, because the target base station does not need to exchange signaling with the MME to complete a handover of a user data path, a time consumed by an entire handover procedure is shorter, and a handover failure caused in a conventional manner is avoided.

Optionally, the local mobile node 103 is configured to:
save a tunnel endpoint identifier and an IP address that are in the first path handover request and that are allocated by the first target eNB 101, so as to send downlink data of the first UE to the first target eNB 101 according to the tunnel endpoint identifier and the IP address that are allocated by the first target eNB 101; and
send, to the first target eNB 101, a tunnel endpoint identifier and an IP address that are allocated by the local mobile node 103, so that the first target eNB 101 sends uplink data of the first UE to the local mobile node 103 according to the tunnel endpoint identifier and the IP address that are allocated by the local mobile node 103.

In this way, a local path handover between a local mobility anchor and a target small cell is completed, that is, the third user data path is established. The third user data path includes an uplink data transmission tunnel for transmitting uplink data of UE and a downlink data transmission tunnel for transmitting downlink data of the UE.

Optionally, the first path handover request is a local path handover request, and the local path handover request is used to instruct to establish the third user data path for the first UE.

The first path handover request is sent by the first target eNB 101 when a first handover request sent by the first source eNB 101 to the first target eNB 101 carries an identifier of the local mobile node 103.

Optionally, the first path handover request carries an identifier of a mobile node.

The local mobile node 103 is further configured to determine that the identifier that is of the mobile node and that is carried in the first path handover request is an identifier of the local mobile node 103.

Optionally, the first path handover request carries an identifier of the first source eNB 101.

The local mobile node 103 is further configured to determine that the identifier of the first source eNB 101 exists in identifiers of the multiple eNBs 101.

Optionally, the local mobile node 103 is further configured to:
when second user equipment UE is handed over from a second source eNB 101 to a second target eNB 101 in the multiple eNBs 101, receive a second path handover request sent by the second target eNB 101, where the second source eNB 101 is not connected to the local mobile node 103, and user plane data is transmitted between the second UE and the serving gateway 104 by using a user data path between the second source eNB 101 and the serving gateway 104; and
send a third path handover request to the MME 102 according to the second path handover request, so as to establish a fourth user data path between the local mobile node 103 and the serving gateway 104 for the second UE; and establish a fifth user data path between the local mobile node 103 and the second target eNB 101 for the second UE according to the second path handover request, so that user plane data is transmitted between the second UE and the serving gateway 104 by using the fourth user data path and the fifth user data path.

The second source eNB 101 corresponding to the second UE is not connected to the local mobile node 103. For example, there is no S1 interface between the second source eNB corresponding to the second UE and the local mobile node 103, that is, the second source eNB 101 is not an eNB controlled by the local mobile node. Therefore, the local mobile node establishes a global user data path between the second target eNB and the serving gateway, that is, the fourth user data path between the local mobile node and the serving gateway, and the fifth user data path between the local mobile node and the second target eNB.

If the local mobile node determines that a source base station is not a base station controlled by the local mobile node, according to a second path handover request (for example, a global path handover request) sent by a target base station, the local mobile node establishes a global path, that is, a user data path between the local mobile node and the serving gateway, and a user data path between the local mobile node and the target base station.

Optionally, the local mobile node 103 is further configured to:
receive runtime information reported by the multiple eNBs 101, where the runtime information includes at least one of the following information: a measurement report, interference information, load information, or coverage information; and
select the first target eNB 101 as a target eNB 101 for a handover according to at least one of the runtime information, a moving speed and/or a moving direction of the first UE, or a quantity of handovers of the first UE.

Optionally, the moving speed and/or the moving direction of the first UE are/is determined according to a historical movement track of the first UE and/or the measurement report.

Optionally, the local mobile node 103 is further configured to send a handover preparation message to the first target eNB 101, so that the first target eNB 101 prepares for a handover in advance.

Optionally, the local mobile node 103 is further configured to send a handover command message to the first source eNB 101, and information that is about a target eNB 101 and that is carried in the handover command message is information about the first target eNB 101.

The information about the target eNB 101 is identification information, a corresponding identifier, or the like of the target eNB, or may be information about a cell of the target eNB 101.

Optionally, the handover command message further carries a handover condition, so that the first source eNB 101 sends the handover condition to the first UE, and the handover condition is used to indicate a condition of handing over the first UE.

The handover condition is a case in which the UE detects that a runtime parameter of a target eNB is greater than or equal to that of the first source eNB, or a case in which the UE receives signaling instructing to perform a handover.

Optionally, the local mobile node 103 is further configured to send an eNB 101 blacklist to the first source eNB 101, so that a target eNB 101 selected by the first source eNB 101 for a handover is not included in the eNB 101 blacklist.

Optionally, the local mobile node 103 is further configured to:
receive a request message sent by a third eNB 101, where the request message includes an identifier of third UE, and the request message is sent in a procedure of re-establishing a radio resource control RRC connection by the third UE and the third eNB 101;
obtain, according to the request message, a context that is of the third UE and that is corresponding to the identifier of the third UE; and
send the context of the third UE to the third eNB 101, so that the third eNB 101 completes the procedure of re-establishing the RRC connection.

Optionally, the local mobile node 103 is further configured to establish a sixth user data path between the local mobile node 103 and the third eNB 101 for the third UE according to the request message.

Based on the communications system in the foregoing embodiment, the present invention further provides a local mobile node. The local mobile node may be implemented by using various board combinations, for example, a handover board and a service processing unit, and may be applied to the communications system that includes an MME and multiple eNBs shown in FIG. 1.

The local mobile node 103 may be connected to the multiple eNBs 101 by using an S1 interface, may be connected to the MME 102 by using an S1-C interface, and may be connected to a serving gateway 104 by using an S1-U interface.

As shown in FIG. 2, the local mobile node includes:
a communications unit 201, configured to interact with the multiple eNBs, the MME, or the serving gateway; and
a processing unit 202, configured to:
   when first user equipment UE is handed over from a first source eNB in the multiple eNBs to a first target eNB in the multiple eNBs, receive, by using the communications unit 201, a first path handover request sent by the first target eNB, where a first user data path is established between the first source eNB and the local mobile node for the first UE, a second user data path is established between the local mobile node and the serving gateway for the first UE, and user plane data is transmitted between the first UE and the serving gateway by using the first user data path and the second user data path; and
   establish a third user data path between the local mobile node and the first target eNB for the first UE according to the first path handover request, so that the user plane data is transmitted between the first UE and the serving gateway by using the third user data path and the second user data path.

In this embodiment, the communications unit 201 in the local mobile node may be implemented by using a handover board or a receive/transmit circuit, and the processing unit 202 may be implemented by using a processing board or a processor.

Optionally, the processing unit 202 is configured to:
save a tunnel endpoint identifier and an IP address that are in the first path handover request and that are allocated by the first target eNB, so as to send downlink data of the first UE to the first target eNB according to the tunnel endpoint identifier and the IP address that are allocated by the first target eNB; and
send, to the first target eNB by using the communications unit 201, a tunnel endpoint identifier and an IP address that are allocated by the local mobile node, so that the first target eNB sends uplink data of the first UE to the local mobile node according to the tunnel endpoint identifier and the IP address that are allocated by the local mobile node.

Optionally, the first path handover request is a local path handover request, and the local path handover request is used to instruct to establish the third user data path for the first UE.

The first path handover request is sent by the first target eNB when a first handover request sent by the first source eNB to the first target eNB carries an identifier of the local mobile node.

Alternatively, the first path handover request carries an identifier of a mobile node.

The processing unit 202 is further configured to determine that the identifier that is of the mobile node and that is carried in the first path handover request is an identifier of the local mobile node.

Alternatively, the first path handover request carries an identifier of the first source eNB.

The processing unit 202 is further configured to determine that the identifier of the first source eNB exists in identifiers of the multiple eNBs.

Optionally, the processing unit 202 is further configured to:
when second user equipment UE is handed over from a second source eNB to a second target eNB in the multiple eNBs, receive, by using the communications unit 201, a second path handover request sent by the second target eNB, where the second source eNB is not connected to the local mobile node, and user plane data is transmitted between the second UE and the serving gateway by using a user data path between the second source eNB and the serving gateway; and
send a third path handover request to the MME according to the second path handover request by using the communications unit 201, so as to establish a fourth user data path between the local mobile node and the serving gateway for the second UE; and establish a fifth user data path between the local mobile node and the second target eNB for the second UE according to the second path handover request, so that user plane data is transmitted between the second UE and the serving gateway by using the fourth user data path and the fifth user data path.

Optionally, the processing unit 202 is further configured to:
receive, by using the communications unit 201, runtime information reported by the multiple eNBs, where the runtime information includes at least one of the following information: a measurement report, interference information, load information, or coverage information; and
select the first target eNB as a target eNB for a handover according to at least one of the runtime information, a moving speed and/or a moving direction of the first UE, or a quantity of handovers of the first UE.

Optionally, the moving speed and/or the moving direction of the first UE are/is determined according to a historical movement track of the first UE and/or the measurement report.

Optionally, the processing unit 202 is further configured to send a handover preparation message to the first target eNB by using the communications unit 201, so that the first target eNB prepares for a handover in advance.

Optionally, the processing unit 202 is further configured to send a handover command message to the first source eNB by using the communications unit 201, and information that is about a target eNB and that is carried in the handover command message is information about the first target eNB.

Optionally, the handover command message further carries a handover condition, so that the first source eNB sends the handover condition to the first UE, and the handover condition is used to indicate a condition of handing over the first UE.

Optionally, the processing unit 202 is further configured to send an eNB blacklist to the first source eNB by using the communications unit 201, so that a target eNB selected by the first source eNB for a handover is not included in the eNB blacklist.

Optionally, the processing unit 202 is further configured to:
receive, by using the communications unit 201, a request message sent by a third eNB, where the request message includes an identifier of third UE, and the request message is sent in a procedure of re-establishing a radio resource control RRC connection by the third UE and the third eNB;
obtain, according to the request message, a context that is of the third UE and that is corresponding to the identifier of the third UE; and
send the context of the third UE to the third eNB by using the communications unit 201, so that the third eNB completes the procedure of re-establishing the RRC connection.

Optionally, the processing unit 202 is further configured to establish a sixth user data path between the local mobile node and the third eNB for the third UE according to the request message.

Based on the communications system in the foregoing embodiment, an embodiment of the present invention further provides an eNB, and the eNB may be connected to the foregoing local mobile node by using an S1 interface.

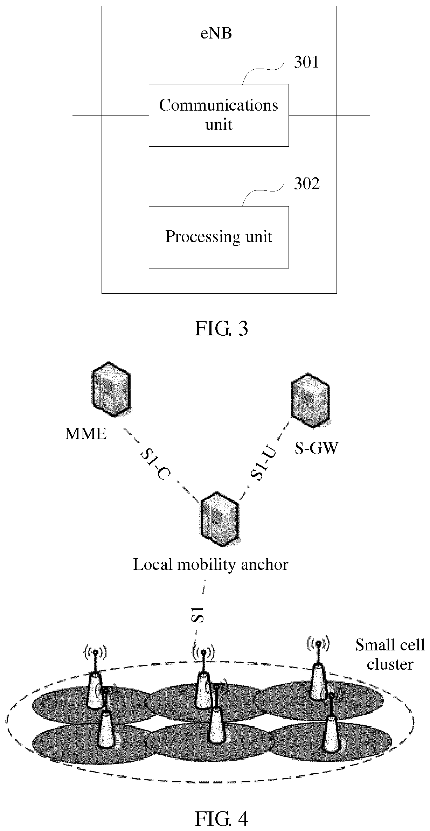

As shown in FIG. 3, the eNB includes:
a communications unit 301, configured to interact with first user equipment UE, a first source eNB, and the local mobile node; and
a processing unit 302, configured to: when the first UE is handed over from a first source eNB in other eNBs to the eNB, send a first path handover request to the local mobile node, so that the local mobile node establishes a third user data path between the local mobile node and the eNB for the first UE according to the first path handover request.

Optionally, the processing unit 302 is configured to:
send, to the local mobile node by using the communications unit 301, a tunnel endpoint identifier and an IP address that are in the first path handover request and that are allocated by the eNB, so that the local mobile node sends downlink data of the first UE to the eNB according to the tunnel endpoint identifier and the IP address that are allocated by the eNB; and
receive and save, by using the communications unit 301, a tunnel endpoint identifier and an IP address that are allocated by the local mobile node, so that the eNB sends uplink data of the first UE to the local mobile node according to the tunnel endpoint identifier and the IP address that are allocated by the local mobile node.

Optionally, the first path handover request is a local path handover request, and the local path handover request is used to instruct to establish the third user data path for the first UE.

Optionally, the first path handover request is sent by the eNB when a first handover request sent by the first source eNB to the eNB carries an identifier of the local mobile node.

Optionally, the first path handover request carries an identifier of a mobile node.

Optionally, the first path handover request carries an identifier of the first source eNB.

Optionally, the processing unit 302 is further configured to:
when second user equipment (UE) is handed over from a second source eNB to the eNB, send a second path handover request to the local mobile node by using the communications unit 301, so that the local mobile node establishes, according to the second path handover request, a fourth user data path between the local mobile node and the serving gateway for the second UE, and a fifth user data path between the local mobile node and the eNB for the second UE, and user plane data is transmitted between the second UE and the serving gateway by using the fourth user data path and the fifth user data path, where the second source eNB is not connected to the local mobile node, and the user plane data is transmitted between the second UE and the serving gateway by using a user data path between the second source eNB and the serving gateway.

Optionally, the processing unit 302 is further configured to:
report runtime information to the local mobile node by using the communications unit 301, so that the local mobile node selects the eNB as a target eNB for a handover according to at least one of the runtime information, a moving speed and/or a moving direction of the first UE, or a quantity of handovers of the first UE, where the runtime information includes at least one of the following information: a measurement report, interference information, load information, or coverage information.

Optionally, the processing unit 302 is further configured to: receive a handover preparation message by using the communications unit 301, and prepare for a handover in advance.

Optionally, the processing unit 302 is further configured to:
send a request message to the local mobile node by using the communications unit 301, so that the local mobile node establishes a sixth user data path between the local mobile node and the eNB for third UE according to the request message, where the request message includes an identifier of the third UE, and the request message is sent in a procedure of re-establishing a radio resource control RRC connection by the third UE and the eNB; and
receive, by using the communications unit 301, a context that is of the third UE and that is sent by the local mobile node, and complete, according to the context of the third UE, the procedure of re-establishing the RRC connection.

Based on the foregoing embodiments, an embodiment of the present invention provides a method for handing over a user terminal between base stations. A local mobile node controls several base stations. In this embodiment, the local mobile node may be a local mobility anchor, and the base station is a small cell. As shown in FIG. 4, the method, provided in this embodiment of the present invention, for handing over a user terminal between base stations may be applied to but not limited to a network architecture shown in the figure.

In this embodiment of the present invention, multiple small cells are classified into different small cell clusters according to a preconfigured or planned physical area, and there is at least one small cell in each small cell cluster. Each small cell cluster is corresponding to one local mobility anchor, and several local mobility anchors are corresponding to one MME and one S-GW according to preconfiguration, a preset quantity, or a preset area. A local mobility anchor is deployed between a small cell cluster and an MME/S-GW in the network architecture. As shown in the figure, the local mobility anchor is connected to each small cell in the small cell cluster by using an S1 interface, and the local mobility anchor is connected to the MME by using an S1-C interface, and is connected to the S-GW by using an S1-U interface. The S1 interface is used as an example in this embodiment. However, an interface is not limited to the S1 interface, and may be an interface of another type.

The MME belongs to a key control node in an access network in an LTE system, and is responsible for signaling processing. The S-GW is responsible for management of user data. The local mobility anchor may receive and send non-UE related signaling, for example, signaling for updating S1 interface establishment, or may receive and send user data, that is, receive user data sent by the S-GW and forward the user data to a small cell in a small cell cluster corresponding to the local mobility anchor.

According to a protocol stack, a user data transmission path between a small cell and the S-GW may be divided into two segments. One segment is a local path between the small cell and the local mobility anchor, and the other segment is a transmission path between the local mobility anchor and the S-GW.

In FIG. 4, to reflect a function of the local mobility anchor, the local mobility anchor is deployed in the network architecture as an independent device. In actual application, according to a specific scenario, the local mobility anchor may be built into a device, such as the MME or the S-GW.

Because the local mobility anchor may receive and send the user data, when UE moves in the small cell cluster and is handed over from a small cell to another small cell, only a local path between the local mobility anchor and a small cell needs to be handed over, thereby reducing signaling in a core network.

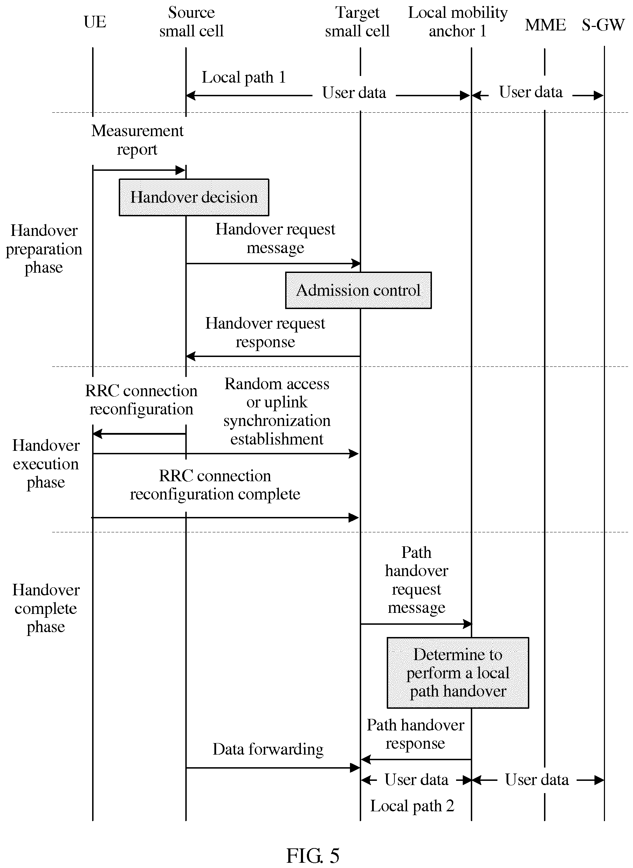

As shown in FIG. 5, an embodiment of the present invention provides a method for handing over a user terminal between small cells, and a procedure of the method includes the following:
First, when UE performs a communications service by using a source small cell, the source small cell and a local mobility anchor transmit user data by using a local path 1. The local path 1 is a user data transmission path between the local mobility anchor and the source small cell, and includes an uplink data transmission tunnel used to transmit uplink user data reported by a source base station to the local mobility anchor and a downlink data transmission tunnel used to transmit downlink user data delivered by the local mobility anchor to the source base station.

The UE sends a measurement report to the source small cell, and the measurement report may include parameters, such as a moving speed and a moving direction of the UE, and received signal strength of a small cell.

The source small cell determines, according to the parameters in the measurement report from the UE, that the UE meets a handover condition of a small cell. For example, when the moving speed of the UE exceeds a preset threshold, or received signal strength of the source small cell is lower than signal strength of another small cell, the source small cell performs a handover decision.

The source small cell selects a target small cell, and sends a handover request message to the target small cell.

After determining that a handover may be performed, the target small cell returns a handover request response. In this case, a handover preparation phase is completed.

The source small cell that receives the handover request response sends radio resource control protocol connection reconfiguration RRC Conn. Reconf. (RRC connection reconfiguration) to the UE.

The UE accesses the target small cell by means of random access or uplink synchronization establishment, and returns RRC connection reconfiguration complete RRC Conn. Reconf. Complete (RRC connection reconfiguration complete). In this case, a radio link is successfully established between the UE and the target small cell, and a handover execution phase is completed.

The target small cell sends a path handover request message to the local mobility anchor.

When determining, according to the path handover request message, to perform a local path handover (that is, both the target small cell and the source small cell belong to a small cell cluster corresponding to the local mobility anchor), the local mobility anchor returns a path handover response to the target small cell.

The source small cell forwards data of the communications service of the UE to the target small cell. In this case, user data is transmitted between the local mobility anchor and the target small cell by using a local path 2, that is, a local path is finally handed over from the local path 1 to the local path 2. The local path 2 is a user data transmission path between the local mobility anchor and the target small cell. Same as the local path 1, the local path 2 also includes an uplink data transmission tunnel used to transmit uplink user data reported by the source base station to the local mobility anchor and a downlink data transmission tunnel used to transmit downlink user data delivered by the local mobility anchor to the source base station.

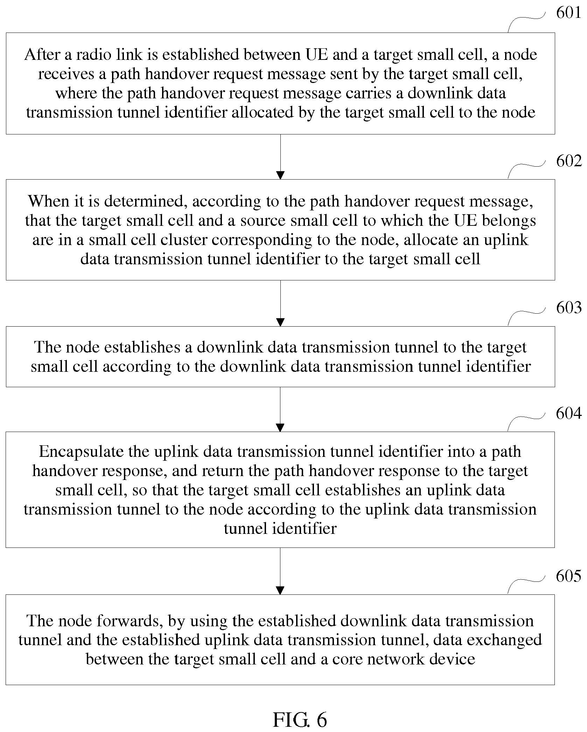

As shown in FIG. 6, an embodiment of the present invention provides a method for handing over a user terminal between small cells, and a procedure of the method includes the following steps.

Step 601: After a radio link is established between UE and a target small cell, a node receives a path handover request message sent by the target small cell, where the path handover request message carries a downlink data transmission tunnel identifier allocated by the target small cell to the node.

When determining that a handover condition of a small cell is met, a small cell currently used by the UE, that is, a source small cell obtains a list of candidate small cells and determines a target small cell from the list of candidate small cells, or determines a corresponding target small cell according to a small cell identifier designated by a local mobility anchor. The source small cell initiates a handover request to the target small cell. After determining that a handover may be performed, the target small cell returns a handover request response to the source small cell. The source small cell sends a handover command message to the UE. Then the radio link is established between the UE and the target small cell. A procedure of handing over the UE may include but be not limited to an existing X2 interface handover procedure.

After the radio link is successfully established between the UE and the target small cell, that is, after the UE is successfully handed over, for example, after the UE initiates random access to the target small cell and succeeds in accessing the target small cell, the target small cell allocates the downlink data transmission tunnel identifier to the node, that is, the local mobility anchor, and sends, to the local mobility anchor, the path handover request message that carries the downlink data transmission tunnel identifier.

Step 602: When it is determined, according to the path handover request message, that the target small cell and a source small cell to which the UE belongs are in a small cell cluster corresponding to the node, allocate an uplink data transmission tunnel identifier to the target small cell. When the local mobility anchor determines that the target small cell and the source small cell belong to a current small cell cluster, it may be determined that the local mobility anchor performs a local path handover, that is, a handover of a path between the local mobility anchor and a small cell in the small cell cluster.

Specifically, step 602 of determining, according to the path handover request message, that the target small cell and a source small cell belong to a small cell cluster corresponding to the node may be performed in a manner that includes but is not limited to the following three manners:
Manner 1: When the path handover request message is a local path handover request message, it is determined that both the target small cell and the source small cell are in the small cell cluster corresponding to the node.
Manner 2: When a user identity carried in the path handover request message is included in all user identities allocated by the node, it is determined that both the target small cell and the source small cell are in the small cell cluster corresponding to the node.
Manner 3: An identifier that is of the source small cell to which the UE belongs and that is carried in the path handover request message is obtained, and if both the obtained identifier of the source small cell and an identifier of the target small cell are in a small cell identifier list corresponding to the node, it is determined that both the target small cell and the source small cell are in the small cell cluster corresponding to the node.

In Manner 1, the path handover request message is a local path handover request, and after it is determined that the target small cell and the source small cell belong to a same small cell cluster, the target small cell sends the local path handover request (that is, the path handover request message) to the local mobility anchor.

Specifically, the source small cell may send a handover request message to the target small cell, and the handover request message carries an identifier of a local mobility anchor corresponding to a small cell cluster in which the source small cell is located. After receiving the handover request message, the target small cell determines, based on the identifier of the local mobility anchor in the handover request message, whether the identifier of the local mobility anchor in the handover request message is the same as an identifier of a local mobility anchor to which the target small cell belongs. If the identifier of the local mobility anchor in the handover request message is the same as the identifier of the local mobility anchor to which the target small cell belongs, the target small cell sends, to the local mobility anchor, the path handover request message that indicates the local path handover request. If the identifier of the local mobility anchor in the handover request message is not the same as the identifier of the local mobility anchor to which the target small cell belongs, the target small cell initiates a global path handover request. A specific global handover procedure is the same as that in the prior art, and details are not described herein.

Optionally, the source small cell may send a handover request message to the target small cell, and the handover request carries an identifier of a small cell cluster in which the source small cell is located. After receiving the handover request message, the target small cell determines, based on the identifier of the small cell cluster in the handover request message, whether the identifier of the small cell cluster in the handover request message is the same as an identifier of a small cell cluster to which the target small cell belongs. If the identifier of the small cell cluster in the handover request message is the same as the identifier of the small cell cluster to which the target small cell belongs, the target small cell sends, to the local mobility anchor, the path handover request message that indicates the local path handover request. If the identifier of the small cell cluster in the handover request message is not the same as the identifier of the small cell cluster to which the target small cell belongs, the target small cell initiates a global path handover request. A specific global handover procedure is the same as that in the prior art, and details are not described herein.

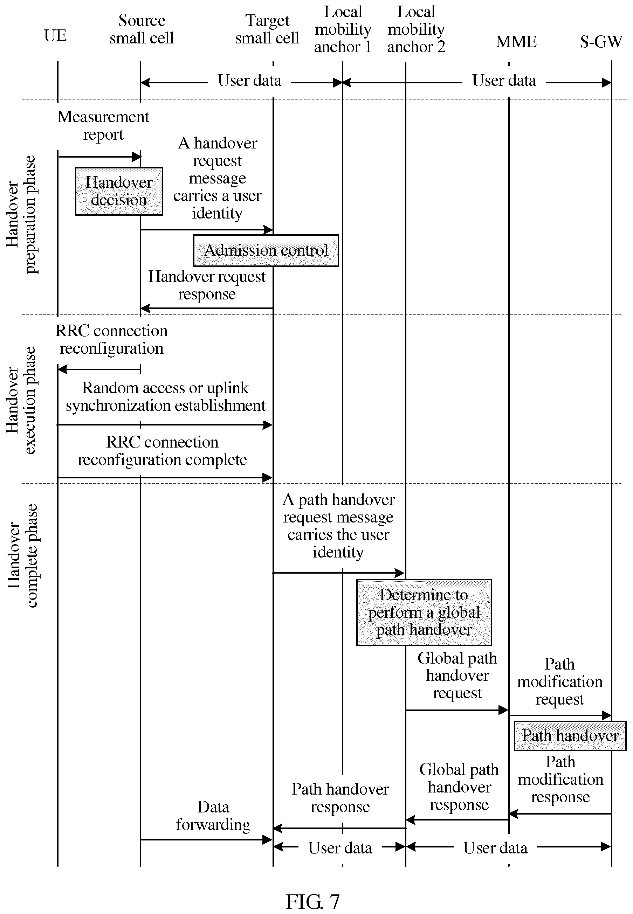

In Manner 2, the local mobility anchor allocates in advance a unique user identity such as a UE S1 AP ID to UE in a corresponding small cell cluster. The UE S1 AP ID is a unique UE logical identity allocated by the local mobility anchor. As shown in FIG. 5, a handover request message sent by the source small cell to the target small cell carries the user identity allocated by the local mobility anchor. After the radio link is established between the UE and the target small cell, the target small cell encapsulates the user identity into the path handover request message and sends the path handover request message to the local mobility anchor. The local mobility anchor determines, according to the user identity, whether to initiate a local path handover. If the local mobility anchor obtains the user identity by searching all user identities allocated by the local mobility anchor, the local mobility anchor performs a local path handover. As shown in FIG. 7, if the local mobility anchor does not obtain the user identity by searching all user identities allocated by the local mobility anchor, the local mobility anchor performs a global path handover, that is, an MME further needs to exchange signaling with an S-GW and the local mobility anchor.

In Manner 3, the local mobility anchor allocates in advance corresponding identifiers to all small cells in a corresponding small cell cluster, and locally saves a small cell identifier list. Specifically, a handover request message sent by the source small cell to the target small cell carries the identifier of the source small cell. After a handover succeeds, the target small cell encapsulates the identifier of the source small cell and the identifier of the target small cell into a path handover request, and sends the path handover request to the local mobility anchor. When obtaining the identifier of the target small cell and the identifier of the source small cell by searching, according to the identifier of the target small cell and the identifier of the source small cell that are carried in the path handover request message, the small cell identifier list corresponding to the local mobility anchor, the local mobility anchor determines that the target small cell and the source small cell belong to a same small cell cluster.

Step 603: The node establishes a downlink data transmission tunnel to the target small cell according to the downlink data transmission tunnel identifier.

Specifically, after receiving the path handover request message sent by the target small cell, the local mobility anchor establishes the downlink data transmission tunnel to the target small cell according to the carried downlink data transmission tunnel identifier that is allocated by the target small cell.

There is no time sequence between step 603 and step 602. Step 603 may be performed before or after step 602, or step 603 and step 602 are performed simultaneously, or after it is determined that the target small cell and the source small cell belong to the current small cell cluster in a process of performing step 602, step 602 of allocating an uplink data transmission tunnel identifier to the target small cell and step 603 are simultaneously performed.

Preferably, in this embodiment of the present invention, step 602 is performed first. That is, it is first determined that the target small cell and the source small cell belong to the current small cell cluster, and then the downlink data transmission tunnel to the target small cell is established according to the downlink data transmission tunnel identifier.

The local mobility anchor and the target small cell may transmit downlink user data according to the downlink data transmission tunnel, that is, the local mobility anchor receives downlink user data sent by the S-GW, and forwards the downlink user data to the target small cell by using the downlink data transmission tunnel.

Step 604: Encapsulate the uplink data transmission tunnel identifier into a path handover response, and return the path handover response to the target small cell, so that the target small cell establishes an uplink data transmission tunnel to the node according to the uplink data transmission tunnel identifier.

The target small cell establishes an uplink data transmission tunnel to the local mobility anchor according to the uplink data transmission tunnel identifier. That is, the local mobility anchor receives, by using the uplink data transmission tunnel, uplink user data reported by the target small cell, and forwards the uplink user data to the S-GW.

In this case, a handover of a local path between the local mobility anchor and the target small cell is completed, and the local path includes the uplink data transmission tunnel and the downlink data transmission tunnel.

Step 605: The node forwards, by using the established downlink data transmission tunnel and the established uplink data transmission tunnel, data exchanged between the target small cell and a core network device.

Specifically, for example, the local mobility anchor receives the downlink user data sent by the S-GW, and forwards the downlink user data to the target small cell by using the downlink data transmission tunnel. The local mobility anchor receives, by using the uplink data transmission tunnel, the uplink user data reported by the target small cell, and forwards the uplink user data to the S-GW.

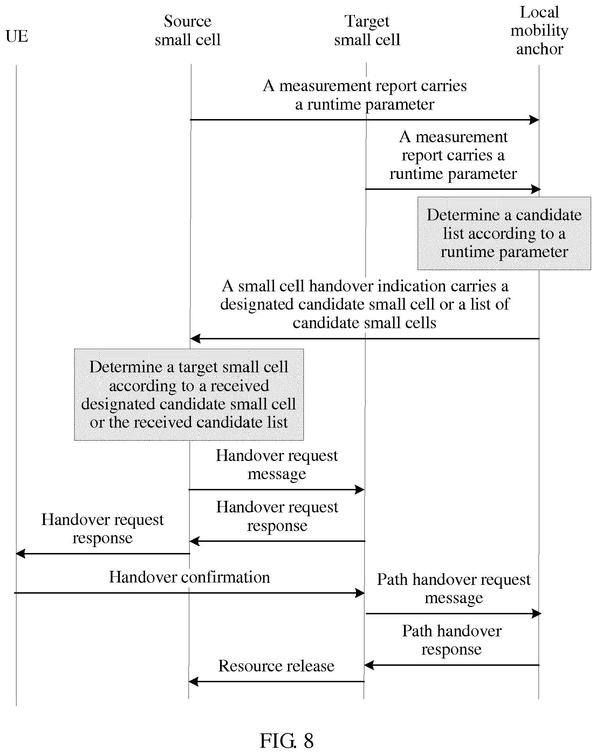

Preferably, in this embodiment of the present invention, before the node receives the path handover request message sent by the target small cell, that is, before the radio link is established between the UE and the target small cell, the target small cell may be determined by using a method that includes but is not limited to the following several methods:
Method 1 includes:
   receiving runtime parameters respectively reported by all small cells included in the small cell cluster corresponding to the node, where the runtime parameter is one or any combination of an interference parameter, a load parameter, or a coverage parameter;
   selecting, as a candidate small cell according to the runtime parameters respectively reported by all the small cells, at least one small cell that reports a runtime parameter less than a preset runtime parameter threshold and that is in all the small cells except the source small cell to which the UE belongs; and
   sending a small cell information list of the candidate small cell to the source small cell, so that the source small cell selects one piece of small cell information from the small cell information list, and uses a small cell corresponding to the selected small cell information as a target small cell to which the UE needs to be handed over.
   As shown in FIG. 8, a specific procedure of sending a candidate small cell to a source small cell by a local mobility anchor includes the following:
   First, all small cells in a small cell cluster report runtime parameters to a corresponding local mobility anchor. The runtime parameter may be independently reported to the local mobility anchor, or may be reported to the local mobility anchor by using a measurement report; the runtime parameter may be but not limited to one or any combination of an interference parameter, a load parameter, a coverage parameter, or a signal strength parameter; and a corresponding runtime parameter threshold is set according to the reported runtime parameter.
   A small cell that reports a runtime parameter less than the corresponding runtime parameter threshold is selected from small cells other than the source small cell as a candidate small cell according to the runtime parameters reported by all the small cells.
   The local mobility anchor sends a list of selected candidate small cells to the source small cell.
   The source small cell determines a most appropriate target small cell according to the received list of candidate small cells. For example, the source small cell selects, as the target small cell, a candidate small cell at a shortest distance, or a candidate small cell that accords with a moving direction of UE, or a candidate small cell with optimal signal quality.
   After the target small cell is determined, the source small cell sends a handover request message to the target small cell, so that a radio link is established between the target small cell and the UE.
   In this way, in a handover preparation phase, a local mobility anchor may collect runtime information of a small cell in a corresponding small cell cluster; select, as a candidate small cell for UE according to a runtime parameter, a small cell that is relatively suitable for a communications service; and send a list of candidate small cells to a source small cell, so that the source small cell can select a most appropriate target small cell from the candidate small cells, thereby improving mobility performance.
Method 2 includes:
   receiving runtime parameters respectively reported by all small cells included in the small cell cluster corresponding to the node, where the runtime parameter is one or any combination of an interference parameter, a load parameter, or a coverage parameter;
   reading a historical handover record of the UE, and determining moving information of the UE according to at least one of a location, of a small cell that the UE passes through, in the historical handover record, or a received measurement report, where the moving information of the UE is a moving speed status and/or a moving direction;
   selecting, as a candidate small cell according to the runtime parameters respectively reported by all the small cells, at least one small cell that reports a runtime parameter less than a preset runtime parameter threshold and that is in all the small cells except the source small cell to which the UE belongs;
   selecting, from selected candidate small cells, a small cell that accords with the moving information of the UE as a finally obtained candidate small cell; and
   sending a small cell information list of the finally obtained candidate small cell to the source small cell, so that the source small cell selects one piece of small cell information from the small cell information list, and uses a small cell corresponding to the selected small cell information as a target small cell to which the UE needs to be handed over.
   In this way, in a handover preparation phase, a local mobility anchor may collect runtime information of a small cell in a corresponding small cell cluster; select, as a candidate small cell for UE according to a runtime parameter and runtime information of the UE, a small cell that is relatively suitable for a communications service; and send a list of candidate small cells to a source small cell, so that the source small cell can select a most appropriate target small cell from the candidate small cells, thereby improving mobility performance.
Method 3 includes:
   obtaining a small cell blacklist corresponding to the UE, and sending the small cell blacklist to the source small cell to which the UE belongs, so that the source small cell selects a small cell from all small cells except a small cell in the small cell blacklist as a target small cell to which the UE needs to be handed over.

In a handover preparation phase, a local mobility anchor may send a preset small cell blacklist to a source small cell, and a small cell in the blacklist is generally a small cell that cannot complete a handover service, or a small cell that has an abnormal runtime parameter, or a small cell that has a designated special service, thereby avoiding a handover failure caused when the source small cell selects the cell in the blacklist as a target small cell. In this way, a success rate of a small cell handover can be ensured, and mobility performance can be improved.

In this embodiment of the present invention, a target small cell may be determined by using the foregoing three methods, so that a radio link is established between UE and a target small cell that is selected by the UE from candidate small cells recommended by a local mobility anchor for the UE. Generally, the UE and the target small cell may establish the radio link by exchanging signaling. Preferably, that the UE and the target small cell establish the radio link further includes: a node controls the UE and the target small cell to establish the radio link, and includes:
reading a historical handover record of the UE, and determining moving information of the UE according to at least one of a location, of a small cell that the UE passes through, in the historical handover record, or a received measurement report, where the moving information of the UE is a moving speed status and/or a moving direction;
determining the target small cell according to a location of a source small cell to which the UE belongs and the moving information of the UE, and sending a handover preparation message to the target small cell; and
after a handover preparation response returned by the target small cell according to the handover preparation message is received, sending a handover command message to the UE by using the source small cell, where the handover command message carries an identifier of the target small cell and a handover occasion, so that when the handover occasion is met, the UE establishes the radio link to the target small cell corresponding to the identifier of the target small cell.

A target small cell is determined according to a moving speed status and a moving direction of UE, and a small cell handover is performed on a designated occasion to perform advance handover preparation, thereby avoiding consuming too much time in a handover process, ensuring a success rate of a small cell handover of the UE, and improving user experience.

Preferably, the handover occasion is a case in which a signal quality parameter of the target small cell is greater than a preset signal quality threshold, or a case in which the UE receives signaling instructing to perform a handover.

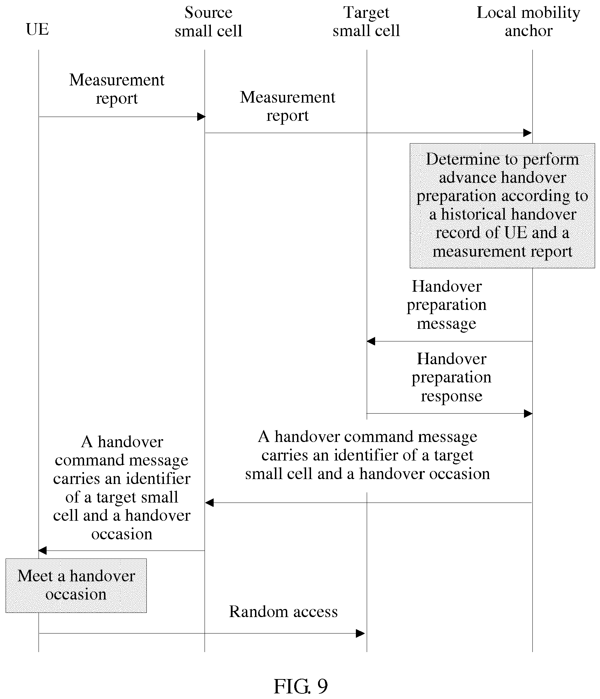

As shown in FIG. 9, a specific procedure of performing advance handover preparation by a local mobility anchor is as follows:
UE sends a measurement report to a source small cell, and then the source small cell sends the measurement report to the local mobility anchor.

The local mobility anchor determines moving information of the UE, such as a speed of the UE, according to the measurement report and a historical handover record of the UE, determines to perform advance handover preparation, and determines a target small cell according to a location of the source small cell and the moving information of the UE.

The local mobility anchor sends a handover preparation message to the target small cell to instruct the target small cell to perform handover preparation, and after receiving a handover preparation response returned by the target small cell, sends, to the source small cell, a handover command message that carries an identifier of the target small cell and a handover occasion, where the handover occasion may be but not limited to one of the following: a case in which a signal quality parameter of the target small cell is greater than a preset signal quality threshold, or a case in which the UE receives L1/L2 signaling instructing to perform a handover.

The source small cell forwards, to the UE, the handover command message that carries the identifier of the target small cell and the handover occasion.

The UE performs a handover when the UE determines that the handover occasion is met, instead of immediately performing a handover after the UE receives the handover command message, so as to establish a radio link to the target small cell.

When the handover occasion is the case in which the signal quality parameter of the target small cell is greater than the preset signal quality threshold, the UE is handed over by itself, that is, when the UE detects that the signal quality parameter of the target small cell is greater than the signal quality threshold, the UE initiates access according to the identifier of the target small cell in the handover command message, and further establish the radio link to the target small cell.

When the handover occasion is the case in which the UE receives the signaling instructing to perform a handover, the UE is triggered, by using signaling at a network layer, to perform a handover, and the signaling instructing to perform a handover may be but not limited to layer 1/layer 2 L1/L2 signaling, at a physical layer, sent on a network side. Specifically, after receiving the handover command message from the local mobility anchor, the source small cell delivers the handover command message to the UE, where the handover command message includes identifier information of a target cell for a handover and an identifier indicating advance handover preparation; after receiving the handover command message that includes the identifier indicating advance handover preparation, the UE waits for L1/L2 signaling of a network; when the source small cell determines that a handover condition is met, for example, signaling quality of the target cell reaches a moving threshold, the network side delivers the L1/L2 signaling to the UE; and after receiving the L1/L2 signaling, the UE initiates access to the target cell.

The L1 signaling is layer 1/physical layer signaling. For example, a one-bit indication is added to a physical dedicated control channel (PDCCH) command. The L2 signaling is generally a medium access control element (MAC CE). In an actual application scenario, a new MAC CE format may be designed to trigger a handover.

Preferably, in this embodiment of the present invention, after a node receives a path handover request message sent by the target small cell, the procedure further includes:
receiving runtime parameters respectively reported by all small cells included in a small cell cluster corresponding to the node, where the runtime parameter is one or any combination of an interference parameter, a load parameter, or a coverage parameter;
reading a historical handover record of the UE, and determining the moving information of the UE according to at least one of a location, of a small cell that the UE passes through, in the historical handover record, or the received measurement report, where the moving information of the UE is a moving speed status and/or a moving direction;
selecting, as a candidate small cell according to the runtime parameters reported by all the small cells and the determined moving information of the UE, at least one small cell that reports a runtime parameter less than a preset runtime parameter threshold, that accords with the moving information of the UE, and that is in all the small cells except a source small cell to which the UE belongs; and
sending a small cell information list of the candidate small cell to the target small cell.

Candidate small cell information is delivered to a target small cell, so that in a next small cell handover, a current target small cell is used as a source small cell for the next handover, and a target small cell for the next handover can be obtained rapidly, thereby reducing a time for determining a target small cell and improving efficiency of a small cell handover.

Preferably, when UE is not successfully handed over from a source small cell to a target small cell, or when establishment of a radio link between UE and a target small cell fails, for example, when the establishment of the radio link between the UE and the target small cell fails, or when a small cell handover fails, the UE may attempt to re-establish the radio link to the target small cell. A procedure of re-establishing the radio link further includes:
receiving a second path handover request message sent when the target small cell does not obtain, by means of searching, a context that is of the UE and that is corresponding to a radio resource control connection re-establishment request RRC Connection Re-establishment Request, where the second path handover request message carries identity information of the UE;
searching for the context of the UE according to the identity information of the UE; and
when the context of the UE is obtained by means of searching, encapsulating the context of the UE into a path handover confirmation message, and returning the path handover confirmation message to the target small cell, so that the target small cell re-establishes the radio link to the UE according to the context of the UE.

According to this method, it is ensured that when RRC connection establishment fails or when a handover fails, a success probability of RRC connection re-establishment is improved, and a success probability of a small cell handover is further improved.

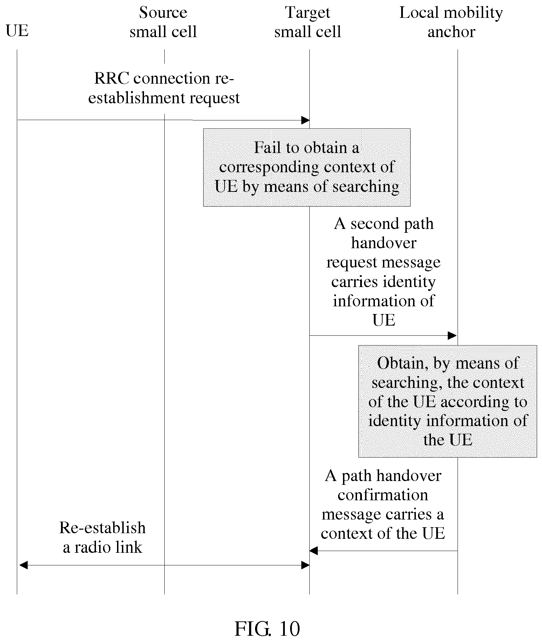

Specifically, as shown in FIG. 10, when establishment of a radio link between UE and a target small cell fails, or when a small cell handover fails, or when RRC reconfiguration fails, a specific procedure of re-establishing the radio link between the UE and the target small cell is as follows:

The UE sends an RRC connection re-establishment request RRC Connection Re-establishment Request to the target small cell.

The target small cell determines identity information of the UE that sends the RRC Connection Re-establishment Request, for example, information such as a short MAC-I for uniquely identifying the UE. The target small cell searches for a corresponding context of the UE according to the identity information of the UE, and if a context that is of the UE and that is corresponding to same identity information of the UE is obtained by means of searching, directly returns an RRC connection re-establishment success message, or if a context that is of the UE and that is corresponding to same identity information of the UE is not obtained by means of searching, sends a second path handover request message to a local mobility anchor, where the second path handover request message carries at least the identity information of the UE, such as the short MAC-I.

When obtaining, by means of searching, the context of the UE according to the identity information of the UE, the local mobility anchor encapsulates the context of the UE into a path handover confirmation message and returns the path handover confirmation message to the target small cell.

The target small cell obtains the context of the UE, and then it is considered that re-establishment succeeds. The target small cell returns the RRC connection re-establishment success message to the UE. In this case, the radio link is re-established between the UE and the target small cell.

In addition, for example, after losing a radio link to a small cell, the UE sends a radio resource control connection re-establishment request message to a re-establishment small cell, and the re-establishment small cell is a candidate small cell selected after the UE loses the radio link. The procedure further includes:
receiving a second path handover request message sent when the re-establishment small cell does not obtain, by means of searching, a context that is of the UE and that is corresponding to the radio resource control connection re-establishment request RRC Connection Re-establishment Request sent by the UE, where the second path handover request message carries the identity information of the UE;
searching for the context of the UE according to the identity information of the UE; and
when the context of the UE is obtained by means of searching, encapsulating the context of the UE into a path handover confirmation message, and returning the path handover confirmation message to the re-establishment small cell, so that the re-establishment small cell re-establishes a radio link to the UE according to the context of the UE.

Specific steps are the same as those of the foregoing method, and details are not repeatedly described herein.

According to this method, it is ensured that when RRC connection establishment fails or when a handover fails, a success probability of RRC connection re-establishment is improved, and a success probability of a small cell handover is further improved.

In conclusion, the embodiments of the present invention provide a communications system, a local mobile node, and a base station. The communications system includes an MME, multiple eNBs, and a local mobile node, and the local mobility node is connected to the multiple eNBs by using an S1 interface, is connected to the MME by using an S1-C interface, and is connected to a serving gateway by using an S1-U interface. The local mobile node receives a path handover request sent by a target eNB, and when determining, according to a path handover request message, that a local path handover needs to be performed, establishes a user data path between the local mobile node and the target eNB for UE according to the path handover request, so that user plane data is transmitted between the UE and the serving gateway by using the user data path. In this way, after the UE is successfully handed over between eNBs, only a user data path between the local mobile node and the eNB needs to be changed without a need to change a user data path between the local mobile node and each of the MME and the S-GW, so that signaling load on the MME can be avoided, and work efficiency of the MME can be improved. In addition, because the target eNB does not need to exchange signaling with the MME to complete a handover of a user data path, a time consumed by an entire handover procedure is shorter, and a handover failure caused in a conventional manner is avoided. In addition, the local mobile node further has a mechanism in which the local mobile node recommends a candidate eNB to a source eNB, recommends, to the target eNB, a candidate eNB for a next handover, performs an advance handover preparation operation for high-speed moving UE, and ensures RRC connection re-establishment between the UE and the target eNB, thereby ensuring that the UE can be successfully handed over to the target eNB, and improving performance of a mobile handover.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some embodiments of the present invention have been described, persons skilled in the art can make changes and modifications to these embodiments once they learn the basic inventive concept. Therefore, the following claims are intended to be construed as to cover the embodiments and all changes and modifications falling within the scope of the present invention.

Obviously, persons skilled in the art can make various modifications and variations to the embodiments of the present invention without departing from the scope of the embodiments of the present invention. The present invention is intended to cover these modifications and variations provided that they fall within the scope of protection defined by the following claims and their equivalent technologies.

## Claims

1. A local mobile node for use in a communications system that comprises a mobility management entity, MME, and multiple evolved NodeBs, eNBs, wherein
the local mobile node is connected to the multiple eNBs, the MME, and a serving gateway; and
the local mobile node comprises:
a communications unit (201), configured to interact with the multiple eNBs, the MME, or the serving gateway; and
a processing unit (202), configured to:
when first user equipment, UE, is handed over from a first source eNB in the multiple eNBs to a first target eNB in the multiple eNBs, receive, by using the communications unit (201), a first path handover request sent by the first target eNB, wherein a first user data path is established between the first source eNB and the local mobile node for the first UE, a second user data path is established between the local mobile node and the serving gateway for the first UE, and user plane data is transmitted between the first UE and the serving gateway by using the first user data path and the second user data path; and
when the first path handover request is a local path handover request, establish a third user data path between the local mobile node and the first target eNB for the first UE according to the first path handover request, so that the user plane data is transmitted between the first UE and the serving gateway by using the third user data path and the second user data path,
**characterized in that** the processing unit (202) is further configured to:
receive, by using the communications unit (201), runtime information reported by the multiple eNBs, wherein the runtime information comprises at least one of the following information: a measurement report, interference information, load information, or coverage information;
select the first target eNB as a target eNB for a handover according to at least one of the runtime information, a moving speed and/or a moving direction of the first UE, or a quantity of handovers of the first UE; and
send a handover preparation message to the first target eNB, the handover preparation message is used to indicate the first target eNB to prepare for the handover.

2. The local mobile node according to claim 1, wherein
the processing unit (202) is configured to:
save a tunnel endpoint identifier and an IP address that are in the first path handover request and that are allocated by the first target eNB, so as to send downlink data of the first UE to the first target eNB according to the tunnel endpoint identifier and the IP address that are allocated by the first target eNB; and
send, to the first target eNB by using the communications unit (201), a tunnel endpoint identifier and an IP address that are allocated by the local mobile node.

3. The local mobile node according to claim 1 or 2, wherein the first path handover request carries an identifier of a mobile node; and
the processing unit (202) is further configured to determine that the identifier that is of the mobile node and that is carried in the first path handover request is an identifier of the local mobile node.

4. The local mobile node according to claim 1 or 2, wherein the first path handover request carries an identifier of the first source eNB; and
the processing unit (202) is further configured to determine that the identifier of the first source eNB exists in identifiers of the multiple eNBs.

5. The local mobile node according to any one of claims 1 to 4, wherein
the processing unit (202) is further configured to:
when second user equipment UE is handed over from a second source eNB to a second target eNB in the multiple eNBs, receive, by using the communications unit (201), a second path handover request sent by the second target eNB, wherein the second source eNB is not connected to the local mobile node, and user plane data is transmitted between the second UE and the serving gateway by using a user data path between the second source eNB and the serving gateway; and
send a third path handover request to the MME according to the second path handover request by using the communications unit (201), so as to establish, by the local mobile node, a fourth user data path between the local mobile node and the serving gateway for the second UE; and establish, by the local mobile node, a fifth user data path between the local mobile node and the second target eNB for the second UE according to the second path handover request, so that user plane data is transmitted between the UE and the serving gateway by using the fourth user data path and the fifth user data path.

6. An evolved NodeB, eNB, wherein the eNB is connected to the local mobile node according to any one of claims 1 to 5; and
the eNB comprises:
a communications unit (301), configured to interact with first user equipment, UE, a first source eNB, and the local mobile node; and
a processing unit (302), configured to: when the first UE is handed over from the first source eNB to the eNB, send a first path handover request to the local mobile node to instruct the local mobile node to establish a user data path between the local mobile node and the eNB for the first UE, wherein the first path handover request is a local path handover request, the local path handover request being sent by the eNB when a first handover request sent by the first source eNB to the eNB carries an identifier of the local mobile node;
**characterized in that** the processing unit (302) is further configured to:
report runtime information to the local mobile node by using the communications unit (301), wherein the runtime information comprises at least one of the following information: a measurement report, interference information, load information, or coverage information; and
receive a handover preparation message from the local mobile node, the handover preparation message is used to indicate the eNB to prepare for a handover.

7. The eNB according to claim 6, wherein
the processing unit (302) is configured to:
send, to the local mobile node by using the communications unit (301), a tunnel endpoint identifier and an IP address that are in the first path handover request and that are allocated by the eNB; and
receive and save, by using the communications unit (301), a tunnel endpoint identifier and an IP address that are allocated by the local mobile node, so that the eNB sends uplink data of the first UE to the local mobile node according to the tunnel endpoint identifier and the IP address that are allocated by the local mobile node.

8. The eNB according to claim 6 or 7, wherein the first path handover request carries an identifier of a mobile node.

9. The eNB according to claim 6 or 7, wherein the first path handover request carries an identifier of the first source eNB.

10. A communications system comprising a mobility management entity, MME (102), multiple evolved NodeBs, eNBs (101) and a local mobile node (103) according to any one of claims 1 to 5, wherein the local mobile node is connected to the multiple eNBs (101), the MME (102), and a serving gateway (104).

## Patentansprüche

1. Lokaler mobiler Knoten zur Verwendung in einem Kommunikationssystem, das eine "Mobility Management Entity", MME, und mehrere "Evolved NodeBs", eNBs, umfasst, wobei
der lokale mobile Knoten mit den mehreren eNBs, der MME und einem bedienenden Gateway verbunden ist; und
der lokale mobile Knoten umfasst:
eine Kommunikationseinheit (201), die dafür ausgelegt ist, mit den mehreren eNBs, der MME oder dem bedienenden Gateway in Wechselwirkung zu stehen; und
eine Verarbeitungseinheit (202), die für Folgendes ausgelegt ist:
wenn ein erstes Benutzergerät, UE, von einem ersten Quell-eNB aus den mehreren eNBs an einen ersten Ziel-eNB aus den mehreren eNBs übergeben wird, Empfangen, unter Verwendung der Kommunikationseinheit (201), einer ersten Pfadübergabeanforderung, die vom ersten Ziel-eNB gesendet wird, wobei ein erster Benutzerdatenpfad zwischen dem ersten Quell-eNB und dem lokalen mobilen Knoten für das erste UE eingerichtet wird, ein zweiter Benutzerdatenpfad zwischen dem lokalen mobilen Knoten und dem bedienenden Gateway für das erste UE eingerichtet wird und Benutzerebenendaten zwischen dem ersten UE und dem bedienenden Gateway unter Verwendung des ersten Benutzerdatenpfads und des zweiten Benutzerdatenpfads übertragen werden; und
wenn die erste Pfadübergabeanforderung eine lokale Pfadübergabeanforderung ist, Einrichten eines dritten Benutzerdatenpfads zwischen dem lokalen mobilen Knoten und dem ersten Ziel-eNB für das erste UE gemäß der ersten Pfadübergabeanforderung, so dass die Benutzerebenendaten zwischen dem ersten UE und dem bedienenden Gateway unter Verwendung des dritten Benutzerdatenpfads und des zweiten Benutzerdatenpfads übertragen werden,
**dadurch gekennzeichnet, dass** die Verarbeitungseinheit (202) ferner für Folgendes ausgelegt ist:
Empfangen, unter Verwendung der Kommunikationseinheit (201), von Laufzeitinformationen, die von den mehreren eNBs gemeldet werden, wobei die Laufzeitinformationen mindestens eine der folgenden Informationen umfassen: einen Messbericht, Störungsinformationen, Lastinformationen oder Abdeckungsinformationen;
Auswählen des ersten Ziel-eNB als einen Ziel-eNB für eine Übergabe entsprechend mindestens einem von den Laufzeitinformationen, einer Bewegungsgeschwindigkeit und/oder einer Bewegungsrichtung des ersten UE oder einer Anzahl von Übergaben des ersten UE; und
Senden einer Übergabevorbereitungsnachricht an den ersten Ziel-eNB, wobei die Übergabevorbereitungsnachricht dazu verwendet wird, den ersten Ziel-eNB zur Vorbereitung der Übergabe anzuzeigen.

2. Lokaler mobiler Knoten nach Anspruch 1, wobei die Verarbeitungseinheit (202) für Folgendes ausgelegt ist:
Speichern einer Tunnel-Endpunktkennung und einer IP-Adresse, die in der ersten Pfadübergabeanforderung enthalten sind und die vom ersten Ziel-eNB zugewiesen werden, damit Downlink-Daten des ersten UE an den ersten Ziel-eNB gemäß der Tunnel-Endpunktkennung und der IP-Adresse, die vom ersten Ziel-eNB zugewiesen werden, gesendet werden; und
Senden, an den ersten Ziel-eNB unter Verwendung der Kommunikationseinheit (201), einer Tunnel-Endpunktkennung und einer IP-Adresse, die vom lokalen mobilen Knoten zugewiesen werden.

3. Lokaler mobiler Knoten nach Anspruch 1 oder 2, wobei die erste Pfadübergabeanforderung eine Kennung eines mobilen Knotens führt; und
die Verarbeitungseinheit (202) ferner dafür ausgelegt ist, zu bestimmen, dass die Kennung des mobilen Knotens, die in der ersten Pfadübergabeanforderung geführt wird, eine Kennung des lokalen mobilen Knotens ist.

4. Lokaler mobiler Knoten nach Anspruch 1 oder 2, wobei die erste Pfadübergabeanforderung eine Kennung des ersten Quell-eNB führt; und
die Verarbeitungseinheit (202) ferner dafür ausgelegt ist, zu bestimmen, dass die Kennung des ersten Quell-eNBs in Kennungen der mehreren eNBs vorhanden ist.

5. Lokaler mobiler Knoten nach einem der Ansprüche 1 bis 4, wobei die Verarbeitungseinheit (202) ferner für Folgendes ausgelegt ist:
wenn ein zweites Benutzergerät UE von einem zweiten Quell-eNB an einen zweiten Ziel-eNB aus den mehreren eNBs übergeben wird, Empfangen, unter Verwendung der Kommunikationseinheit (201), einer vom zweiten Ziel-eNB gesendeten zweiten Pfadübergabeanforderung, wobei der zweite Quell-eNB nicht mit dem lokalen mobilen Knoten verbunden ist und Benutzerebenendaten zwischen dem zweiten UE und dem bedienenden Gateway unter Verwendung eines Benutzerdatenpfads zwischen dem zweiten Quell-eNB und dem bedienenden Gateway übertragen werden; und
Senden einer dritten Pfadübergabeanforderung an die MME gemäß der zweiten Pfadübergabeanforderung unter Verwendung der Kommunikationseinheit (201), damit durch den lokalen mobilen Knoten ein vierter Benutzerdatenpfad zwischen dem lokalen mobilen Knoten und dem bedienenden Gateway für das zweite UE eingerichtet wird; und Einrichten, durch den lokalen mobilen Knoten, eines fünften Benutzerdatenpfades zwischen dem lokalen mobilen Knoten und dem zweiten Ziel-eNB für das zweite UE gemäß der zweiten Pfadübergabeanforderung, so dass Benutzerebenendaten zwischen dem UE und dem bedienenden Gateway unter Verwendung des vierten Benutzerdatenpfads und des fünften Benutzerdatenpfads übertragen werden.

6. Evolved NodeB, eNB, wobei der eNB mit dem lokalen mobilen Knoten nach einem der Ansprüche 1 bis 5 verbunden ist; und
der eNB umfasst:
eine Kommunikationseinheit (301), die dafür ausgelegt ist, mit dem ersten Benutzergerät, UE, einem ersten Quell-eNB und dem lokalen mobilen Knoten in Wechselwirkung zu stehen; und
eine Verarbeitungseinheit (302), die für Folgendes ausgelegt ist: wenn das erste UE vom ersten Quell-eNB an den eNB übergeben wird, Senden einer ersten Pfadübergabeanforderung an den lokalen mobilen Knoten, um den lokalen mobilen Knoten anzuweisen, einen Benutzerdatenpfad zwischen dem lokalen mobilen Knoten und dem eNB für das erste UE einzurichten, wobei die erste Pfadübergabeanforderung eine lokale Pfadübergabeanforderung ist, wobei die lokale Pfadübergabeanforderung vom eNB gesendet wird, wenn eine erste Übergabeanforderung, die vom ersten Quell-eNB an den eNB gesendet wird, eine Kennung des lokalen mobilen Knotens führt;
**dadurch gekennzeichnet, dass** die Verarbeitungseinheit (302) ferner für Folgendes ausgelegt ist:
Melden von Laufzeitinformationen an den lokalen mobilen Knoten unter Verwendung der Kommunikationseinheit (301), wobei die Laufzeitinformationen mindestens eine der folgenden Informationen umfassen: einen Messbericht, Störungsinformationen, Lastinformationen oder Abdeckungsinformationen; und Empfangen einer Übergabevorbereitungsnachricht vom lokalen mobilen Knoten, wobei die Übergabevorbereitungsnachricht dazu verwendet wird, den eNB zur Vorbereitung der Übergabe anzuzeigen.

7. eNB nach Anspruch 6, wobei
die Verarbeitungseinheit (302) für Folgendes ausgelegt ist:
Senden, an den lokalen mobilen Knoten unter Verwendung der Kommunikationseinheit (301), einer Tunnel-Endpunktkennung und einer IP-Adresse, die in der ersten Pfadübergabeanforderung enthalten sind und die vom eNB zugewiesen werden; und
Empfangen und Speichern, unter Verwendung der Kommunikationseinheit (301), einer Tunnel-Endpunktkennung und einer IP-Adresse, die vom lokalen mobilen Knoten zugewiesen werden, damit der eNB Uplink-Daten des ersten UE entsprechend der Tunnel-Endpunktkennung und der IP-Adresse, die vom lokalen mobilen Knoten zugewiesen werden, an den lokalen mobilen Knoten sendet.

8. eNB nach Anspruch 6 oder 7, wobei die erste Pfadübergabeanforderung eine Kennung eines mobilen Knotens führt.

9. eNB nach Anspruch 6 oder 7, wobei die erste Pfadübergabeanforderung eine Kennung des ersten Quell-eNB führt.

10. Kommunikationssystem, umfassend eine "Mobility Management Entity", MME (102), mehrere "Evolved NodeBs", eNBs (101) und einen lokalen mobilen Knoten (103) nach einem der Ansprüche 1 bis 5, wobei der lokale mobile Knoten mit den mehreren eNBs (101), der MME (102) und einem bedienenden Gateway (104) verbunden ist.

## Revendications

1. Nœud mobile local destiné à être utilisé dans un système de communication qui comprend une entité de gestion de la mobilité, notée MME, et de multiples NodeB évolués, notés eNB,
le nœud mobile local étant connecté aux multiples eNB, à la MME et à une passerelle de desserte ; et
le nœud mobile local comprenant :
une unité de communication (201), configurée pour interagir avec les multiples eNB, la MME ou la passerelle de desserte ; et
une unité de traitement (202), configurée pour :
lorsqu'un premier équipement utilisateur, noté UE, est transféré depuis un premier eNB source parmi les multiples eNB vers un premier eNB cible parmi les multiples eNB, recevoir, au moyen de l'unité de communication (201), une première requête de transfert de trajet envoyée par le premier eNB cible, un premier trajet de données utilisateur étant établi entre le premier eNB source et le nœud mobile local pour le premier UE, un deuxième trajet de données utilisateur étant établi entre le nœud mobile local et la passerelle de desserte pour le premier UE, et des données de plan utilisateur étant transmises entre le premier UE et la passerelle de desserte au moyen du premier trajet de données utilisateur et du deuxième trajet de données utilisateur ; et
lorsque la première requête de transfert de trajet est une requête de transfert de trajet local, établir un troisième trajet de données utilisateur entre le nœud mobile local et le premier eNB cible pour le premier UE selon la première requête de transfert de trajet de façon à transmettre les données de plan utilisateur entre le premier UE et la passerelle de desserte au moyen du troisième trajet de données utilisateur et du deuxième trajet de données utilisateur,
**caractérisé en ce que** l'unité de traitement (202) est configurée en outre pour :
recevoir, au moyen de l'unité de communication (201), des informations d'exécution rapportées par les multiples eNB, les informations d'exécution comprenant au moins un élément parmi les informations suivantes : un rapport de mesure, des informations d'interférence, des informations de charge ou des informations de couverture ;
sélectionner le premier eNB cible en tant qu'eNB cible pour un transfert selon au moins un élément parmi les informations d'exécution, une vitesse de déplacement et/ou une direction de déplacement du premier UE, ou une quantité de transferts du premier UE ; et
envoyer un message de préparation de transfert au premier eNB cible, le message de préparation de transfert servant à indiquer au premier eNB cible de se préparer pour le transfert.

2. Nœud mobile local selon la revendication 1, dans lequel
l'unité de traitement (202) est configurée pour :
mémoriser un identifiant de point d'extrémité de tunnel et une adresse IP contenus dans la première requête de transfert de trajet et alloués par le premier eNB cible, de manière à envoyer des données de liaison descendante du premier UE au premier eNB cible selon l'identifiant de point d'extrémité de tunnel et l'adresse IP alloués par le premier eNB cible ; et
envoyer, au premier eNB cible au moyen de l'unité de communication (201), un identifiant de point d'extrémité de tunnel et une adresse IP alloués par le nœud mobile local.

3. Nœud mobile local selon la revendication 1 ou 2, dans lequel la première requête de transfert de trajet véhicule un identifiant d'un nœud mobile ; et
l'unité de traitement (202) est configurée en outre pour déterminer que l'identifiant du nœud mobile véhiculé dans la première requête de transfert de trajet est un identifiant du nœud mobile local.

4. Nœud mobile local selon la revendication 1 ou 2, dans lequel la première requête de transfert de trajet véhicule un identifiant du premier eNB source ; et
l'unité de traitement (202) est configurée en outre pour déterminer que l'identifiant du premier eNB source est présent parmi des identifiants des multiples eNB

5. Nœud mobile local selon l'une quelconque des revendications 1 à 4, dans lequel l'unité de traitement (202) est configurée en outre pour :
lorsqu'un deuxième équipement utilisateur, UE, est transféré depuis un deuxième eNB source vers un deuxième eNB cible parmi les multiples eNB, recevoir, au moyen de l'unité de communication (201), une deuxième requête de transfert de trajet envoyée par le deuxième eNB cible, le deuxième eNB source n'étant pas connecté au nœud mobile local, et des données de plan utilisateur étant transmises entre le deuxième UE et la passerelle de desserte au moyen d'un trajet de données utilisateur entre le deuxième eNB source et la passerelle de desserte ; et
envoyer une troisième requête de transfert de trajet à la MME selon la deuxième requête de transfert de trajet au moyen de l'unité de communication (201), de manière à établir, par le nœud mobile local, un quatrième trajet de données utilisateur entre le nœud mobile local et la passerelle de desserte pour le deuxième UE ; et établir, par le nœud mobile local, un cinquième trajet de données utilisateur entre le nœud mobile local et le deuxième eNB cible pour le deuxième UE selon la deuxième requête de transfert de trajet de façon à transmettre des données de plan utilisateur entre l'UE et la passerelle de desserte au moyen du quatrième trajet de données utilisateur et du cinquième trajet de données utilisateur.

6. NodeB évolué, noté eNB, l'eNB étant connecté au nœud mobile local selon l'une quelconque des revendications 1 à 5 ; et
l'eNB comprenant :
une unité de communication (301), configurée pour interagir avec un premier équipement utilisateur, noté UE, un premier eNB source et le nœud mobile local ; et une unité de traitement (302), configurée pour : lorsque le premier UE est transféré depuis le premier eNB source vers l'eNB, envoyer une première requête de transfert de trajet au nœud mobile local afin de donner pour instruction au nœud mobile local d'établir un trajet de données utilisateur entre le nœud mobile local et l'eNB pour le premier UE, la première requête de transfert de trajet étant une requête de transfert de trajet local, la requête de transfert de trajet local étant envoyée par l'eNB lorsqu'une première requête de transfert envoyée par le premier eNB source à l'eNB véhicule un identifiant du nœud mobile local ;
**caractérisé en ce que** l'unité de traitement (302) est configurée en outre pour :
rapporter des informations d'exécution au nœud mobile local au moyen de l'unité de communication (301), les informations d'exécution comprenant au moins un élément parmi les informations suivantes un rapport de mesure, des informations d'interférence, des informations de charge ou des informations de couverture ; et
recevoir un message de préparation de transfert depuis le nœud mobile local, le message de préparation de transfert servant à indiquer à l'eNB de se préparer pour un transfert.

7. eNB selon la revendication 6, dans lequel
l'unité de traitement (302) est configurée pour :
envoyer, au nœud mobile local au moyen de l'unité de communication (301), un identifiant de point d'extrémité de tunnel et une adresse IP contenus dans la première requête de transfert de trajet et alloués par l'eNB ; et
recevoir et mémoriser, au moyen de l'unité de communication (301), un identifiant de point d'extrémité de tunnel et une adresse IP alloués par le nœud mobile local de manière à ce que l'eNB envoie des données de liaison montante du premier UE au nœud mobile local selon l'identifiant de point d'extrémité de tunnel et l'adresse IP alloués par le nœud mobile local.

8. eNB selon la revendication 6 ou 7, dans lequel la première requête de transfert de trajet véhicule un identifiant d'un nœud mobile.

9. eNB selon la revendication 6 ou 7, dans lequel la première requête de transfert de trajet véhicule un identifiant du premier eNB source.

10. Système de communication comprenant une entité de gestion de la mobilité, notée MME, (102), de multiples NodeB évolués, notés eNB, (101) et un nœud mobile local (103) selon l'une quelconque des revendications 1 à 5, dans lequel le nœud mobile local est connecté aux multiples eNB (101), à la MME (102) et à une passerelle de desserte (104).
